# FASCICULE DE BREVET EUROPEEN

(11) **EP 0 715 805 B1**
(45) Date de publication et mention de la délivrance du brevet: **24.07.2002**
(21) Numéro de dépôt: 95402737.1
(22) Date de dépôt: 05.12.1995
(51) Int. Cl.: A01G 31/00

(54) **Substrat pour lutte "biologique"**
Substrat für biologische Schädlinsgbekämpfung
Substrate for biological pest control

(30) Priorité: 09.12.1994 FR 9414840
(43) Date de publication de la demande: 12.06.1996
(73) Titulaire: SAINT-GOBAIN ISOVER, 92400 Courbevoie (FR)
(72) Inventeur: Van der Jagt, Aloysius, NL-2181 LT Hillegom (NL)
(74) Mandataire: Muller, René

(56) Documents cités:
- EP-A- 0 407 264
- WO-A-94/08448
- WO-A-94/16549
- MEDEDELINGEN VAN DE FACULTEIT LANDBOUWWETENSCHAPPEN RIJKSUNIVERSITEIT GENT, vol. 53, no. 3A, 1988 GENT (BE), pages 961-966, BENNISON, J. A. 'Integrated control of thrips on cucumber in the United Kingdom'
- NACHRICHTENBLATT FÜR DEN PFLANZENSCHUTZ IN DER DDR, vol. 40, no. 11, 1986 pages 227-230, KARG, W. ET AL. 'Massenvermehrung und Einsatzmöglichkeit der oligophagen Raubmilbe Amblyseius mckenziei Schuster et Pritchard in Gewächshauskulturen'

## Description

La lutte dite intégrée contre les organismes nuisibles connaît un développement important. Sous cette dénomination, figurent des techniques très diverses mais qui toutes ont en commun le souci de minimiser le recours à des substances chimiques pour la protection des cultures, notamment, de pesticides chimiques destinés à combattre les organismes nuisibles qui peuvent endommager les plantes.

La limitation de l'utilisation des substances chimiques laisse entière la question du bon développement des plantes. Pour répondre à cette question en ce qui concerne la protection contre les nuisibles, des solutions sont proposées qui font intervenir des agents naturels qui combattent ces nuisibles.

Pour lutter contre un nuisible déterminé, on peut ainsi favoriser la présence d'un auxiliaire inoffensif pour la plante et dont le nuisible constitue la proie.

Les conditions de cultures en serre sur des substrats artificiels tels que les laines minérales ou les mousses de matériau synthétique (notamment de polyuréthane), bien que ces substrats soient eux-mêmes parfaitement stériles lors de leur mise en place, ne permettent pas d'éviter le développement des nuisibles. Il n'est pas possible de stériliser l'ensemble des équipements, et les serres ne sont pas « étanches », laissant la place au développement de tous les nuisibles traditionnels. Dans ces conditions, il peut être souhaité pour des cultures en serre de faire intervenir des auxiliaires.

Traditionnellement la culture sur substrat artificiel comporte plusieurs étapes qui sont conduites sur différents types de substrats. Le plus souvent, chaque étape de la culture est également conduite par un professionnel spécialisé. Ainsi, les « propagateurs » sont ceux qui interviennent au début de la culture et procèdent à la germination sur des « plateaux » appropriés comportant un grand nombre de « bouchons » de très petites dimensions (2 à 5 cm de diamètre sur autant de hauteur), lesquels sont ensuite disposés dans des substrats (notamment des substrats appelés « cubes » du fait de leur forme généralement cubique) de dimensions supérieures sur lesquels se développent les plantules. La germination et la croissance des plantules peuvent aussi, le cas échéant, être conduites entièrement sur le cube, donc sans l'intermédiaire du bouchon.

Les nuisibles se développent à tous les stades de la culture et, en conséquence, la présence des agents susceptibles de les combattre peut être souhaitée à chacun de ces stades.

Parmi les ravageurs les plus répandus que l'on souhaite combattre dans les cultures en serre, figurent notamment des ravageurs tels que les aleurodes des serres, les thrips, les pucerons, les araignées rouges, les mineuses... Pour combattre ces ravageurs, dans toute la mesure du possible on s'efforce d'utiliser au moins un auxiliaire.

La présence des auxiliaires dans les serres n'est généralement pas spontanée et passe par l'introduction en quantité de ceux-ci. « L'élevage » de ces auxiliaires est ordinairement fait par des entreprises spécialisées qui les délivrent dans un état commode pour leur mise en oeuvre.

Il a été proposé antérieurement de fixer les oeufs d'auxiliaires sur des petites feuilles de carton au moyen d'une glu. Ces cartons sont ensuite placés par les serristes à proximité des plants pour faciliter le passage des larves, après éclosion des oeufs de celles-ci, sur les plants ou plantules.

Ces modes de mise en oeuvre conduisent cependant à une dispersion difficile. Si la mise en place des cartons de support ne pose pas de problème délicat chez les serristes, chez les propagateurs, ces cartons ne peuvent être localisés à proximité de chaque plantule. Par ailleurs, par leur conditionnement et par leur mode de mise en oeuvre, ces moyens ne permettent pas un développement parfaitement satisfaisant des auxiliaires.

Il a également été proposé de placer les auxiliaires dans des sachets suspendus dans les serres à proximité de plants à protéger. Cette manière, pas plus que la précédente, ne conduit à un développement satisfaisant des auxiliaires et l'efficacité de la protection est d'autant moins bien assurée que les sachets sont plus éloignés des plantes à protéger.

Le fait que le développement des plantules sur les cubes est conduit par le propagateur dans un site différent de celui dans lequel s'effectue l'achèvement de la culture imposerait aussi au moins une double application des auxiliaires, une première fois chez le propagateur et une deuxième fois chez le serriste. Chacune de ces opérations ajouterait bien évidemment à la complexité d'ensemble du processus de culture et au coût global de ces opérations. Dans le document "Mededelingen von de faculteit landbouw wetenschappen Rijksuniversiteit Gent" vol.53, no. 3A, 1988 Gent (BE), pages 961-966, il est proposé de positioner des auxiliaires sur la surface d'un substrat de laine de roche.

Un but de l'invention est de rendre plus commode l'utilisation de ces agents destinés à combattre les nuisibles en limitant et facilitant, autant qu'il est possible, les opérations réalisées par les propagateurs et par les serristes. Parallèlement, un autre but de l'invention est de faire en sorte que la mise en oeuvre de ces mêmes agents conduise à la meilleure efficacité possible de la protection recherchée en améliorant la distribution de ceux-ci à la fois dans l'espace constitué par les substrats de culture, et dans le temps de manière à couvrir la plus large part possible de l'ensemble du processus de culture.

Les inventeurs proposent à cet effet de placer directement les auxiliaires et leur milieu d'élevage dans chaque substrat à proximité immédiate des graines germées, plantules ou plants, de telle sorte qu'ils puissent sans difficulté atteindre ces plantules ou plants et détruire les nuisibles dès que ceux-ci se présentent.

Par auxiliaire, on entend dans la suite l'ensemble des oeufs, larves ou nymphes et adultes correspondant aux différents stades de leur développement.

Les auxiliaires sont placés dans le substrat de telle manière que les conditions de développement soient les meilleures possible. Ces conditions sont variées. Il s'agit d'abord de la température. Celle-ci doit être modérée. Une température trop basse ralentit ou stoppe le développement ; une température trop élevée peut amener la destruction des auxiliaires. En général, une température de 15 à 25°C est préférée. Il s'agit ensuite également des conditions d'humidité. Un certain taux d'humidité est nécessaire. Les auxiliaires doivent aussi être ventilés.

Il va de soi que les auxiliaires sont livrés à l'utilisateur avec un support. Ce dernier est normalement constitué par le milieu apte à recevoir ces auxiliaires. A titre indicatif, pour un prédateur usuel tel que l'Amblyseius cucumeris, les auxiliaires sont développés habituellement sur un support constitué de son. C'est donc le son avec les auxiliaires qui est appliqué sur le substrat de culture.

L'invention propose d'améliorer le développement des auxiliaires en tirant parti des qualités du substrat artificiel sur lequel s'effectue la culture.

Dans la suite de la description, il sera fait référence aux substrats de laine minérale qui constituent un milieu particulièrement préféré. L'invention s'étend cependant à tous les milieux artificiels qui permettent de reproduire les conditions précisées à propos de ces substrats fibreux et, notamment aux substrats à base de mousses synthétiques telles que les mousses de polyuréthane.

Les inventeurs ont montré en effet que le milieu de culture est propice au développement des auxiliaires sans qu'il soit nécessaire de modifier profondément sa structure. Ils ont constaté dans ce sens que la formation de « logements » à la face supérieure de ces substrats, de type laine de verre ou laine de roche, permet notamment d'entretenir d'excellentes conditions d'humidité et de température lors de l'utilisation.

Pour ce qui concerne le taux d'humidité retenu dans ces substrats fibreux, il est très sensiblement supérieur à celui de l'atmosphère de la serre. Compte tenu de la présence dans ces substrats d'une certaine quantité d'eau, l'atmosphère dans le logement, sans être saturée d'humidité, est toujours à un taux élevé de l'ordre de 60 à 95 % selon la ventilation et le taux d'humidité qui règne dans la serre. De préférence, l'hygrométrie est comprise entre 65 et 90 %.

Les logements ménagés dans les substrats évitent également les écarts de température. Dans le cas donné en exemple où les auxiliaires sont élevés sur du son, ce dernier qui est exposé à l'humidité fermente en dégageant de la chaleur. Les logements selon l'invention, situés dans une laine minérale, conservent une partie de cette chaleur, ce qui entretient une température légèrement supérieure à la température ambiante.

Les logements sont avantageusement de formes et de dimensions qui permettent, notamment, de maintenir de bonnes conditions thermiques et hygrométriques.

Ces logements sont, soit directement ménagés dans le matériau constituant le substrat, soit sont obtenus par introduction d'un petit conteneur dans ce même matériau.

L'invention concerne aussi les substrats artificiels pour culture hors-sol, notamment ceux en laine minérale (verre ou roche) pourvus des logements destinés à recevoir les auxiliaires et, le cas échéant, les conteneurs utilisés avec ces substrats.

Pour accroître l'étendue de la lutte biologique à l'ensemble de la culture, il est préférable selon l'invention d'utiliser les substrats comportant les logements selon l'invention dès la phase initiale, à savoir celle qui s'effectue sur des « cubes » de dimensions limitées, de l'ordre du décimètre cube. Lorsque des cubes présentant cette structure sont utilisés, il est possible et préféré de poursuivre l'application des auxiliaires à partir de ces logements pratiqués dans les cubes. Ceci peut néanmoins se combiner avec l'utilisation de « pains » comportant eux-mêmes des logements destinés aux auxiliaires. Alternativement, l'application des auxiliaires dans les conditions de l'invention peut aussi être limitée à la phase de culture qui s'opère sur les pains. En d'autres termes, les logements peuvent également se situer soit sur les cubes, soit sur les pains, soit sur ces deux substrats.

Le cas échéant lorsque, comme pour la culture des roses, le développement s'effectue sur un substrat de forme non cubique, par exemple sur un substrat de forme cylindrique (remplaçant le substrat de forme cubique plus classique), ce substrat peut également recevoir un logement destiné aux auxiliaires. L'invention concerne avantageusement tous ces types de substrats.

La présence de logements dans lesquels les auxiliaires sont introduits dans le substrat de culture et à proximité des plantules ou plants à protéger est, par ailleurs, utile pour stabiliser ces auxiliaires lorsque le substrat est déplacé au cours de la culture. Une telle opération intervient, par exemple, chez le propagateur lorsque les cubes, initialement regroupés en ensembles dans lesquels ils sont disposés de façon contiguë, sont écartés pour tenir compte du besoin d'espace des plantes. Cette stabilisation des auxiliaires placés dans un logement du cube est encore plus utile dans le transport des plants depuis le propagateur jusqu'au serriste.

Les dimensions du logement aménagé dans les substrats (cubes ou pains) sont fonction notamment du volume du support qu'il doit recevoir et, comme indiqué ci-dessus, des conditions hygrométriques et thermiques liées au développement des auxiliaires. Un volume suffisant d'auxiliaires est appliqué sur chaque substrat pour garantir la présence d'un nombre approprié d'individus pour chaque plante. Le nombre d'auxiliaires nécessaire tient compte de l'activité requise et des conditions extérieures. Dans le cas d'un auxiliaire prédateur tel que l'Amblyseius cucumeris, l'activité est moindre à faible température. Même si le développement des ravageurs est également moindre, on préfère mettre en oeuvre un nombre plus grand de prédateurs et donc un volume plus important de support, étant entendu que le nombre d'auxiliaires pour un volume donné de support reste sensiblement constant dans des conditions de production déterminées.

Le nombre d'auxiliaires initialement introduit par plante peut aussi varier de quelques unités à quelques dizaines d'unités. Toujours dans le cas de l'Amblyseius cucumeris, ce nombre sera par exemple entre 5 et 100 et, plus habituellement, entre 10 et 50. Un nombre plus faible conduit à un risque d'activité insuffisant. Un nombre beaucoup plus grand sera habituellement superflu.

Dans la pratique, compte tenu des nombres indiqués précédemment et des conditions dans lesquelles les auxiliaires sont produits, le volume utilisé est de l'ordre de 0,5 à 20 cm³, généralement de 0,5 à 10 cm³ et, plus habituellement, de 1 à 5 cm³ de support par plante. La forme des logements est commandée par les mêmes impératifs que ceux indiqués précédemment à propos de leur volume. Il s'agit de maintenir convenablement les auxiliaires et de leur offrir les conditions de leur bon développement.

Les logements présentent une ouverture suffisante pour que la mise en place du support et des auxiliaires soit relativement facile. Cette ouverture ne doit pas être trop vaste pour que le produit introduit ne s'échappe pas trop aisément. De même, pour bien retenir le support, les logements doivent présenter une certaine profondeur.

Comme indiqué précédemment, le taux d'humidité dans l'atmosphère du logement est maintenu relativement élevé en raison même de l'eau qui demeure dans le substrat, et ceci même si le logement est relativement peu profond à partir de la face supérieure de ce substrat. Le choix est donc davantage de limiter la profondeur pour ne pas risquer, soit de « noyer » les auxiliaires dans le cas où le logement est aménagé directement dans le matériau du substrat et où, par conséquent, les auxiliaires sont en contact avec le substrat, soit encore d'avoir une température trop élevée en cas de fermentation du milieu d'élevage.

Dans la pratique, les logements, lorsqu'ils sont directement ménagés dans le substrat, auront une ouverture et une profondeur analogue, de quelques centimètres. Habituellement, la profondeur sera un peu moindre que le diamètre de l'ouverture. Les logements sont constitués, par exemple, de trous cylindriques de 1 à 6 cm (préférentiellement de 2 à 6 cm) de diamètre et de 0,2 à 3 cm (préférentiellement de 0,5 à 3 cm) de profondeur créée dans le matériau du substrat. Dans ce cas, les logements sont avantageusement formés comme le sont ceux sur les cubes destinés à recevoir, soit le bouchon, soit la bouture (lorsqu'on n'utilise pas de bouchon) en fraisant le bloc fibreux constituant le substrat. Le même type de logement peut être réalisé sur cube ou sur pain.

Les inventeurs ont également constaté qu'il était préférable de ne pas disposer le milieu d'élevage des auxiliaires au contact même des plantules ou des graines. Ce contact est nuisible au bon développement des plantules. La raison de ceci tient probablement aux substances accumulées dans le milieu support et qui se révéleraient toxiques pour les plantules lorsqu'elles sont au contact direct avec celles-ci.

Quelle que soit la raison exacte, il est préférable pour les cubes de disposer à la face supérieure d'un ou plusieurs logements séparés de celui (ou ceux) destiné(s) à recevoir la graine ou le bouchon. Ce(s) dernier(s) est(sont) souvent situé(s) au centre (respectivement sur des côtés opposés) de la face pour permettre une croissance homogène dans tout le cube. Pour cette raison, s'il ne reçoit pas de conteneur mais est constitué uniquement de la cavité ménagée dans la matériau du substrat, le logement destiné à recevoir le milieu d'élevage des auxiliaires est placé indifféremment sur la surface restante mais, de préférence, sans communication avec celui(ou ceux) devant recevoir la graine ou le bouchon toujours pour éviter le contact avec la plantule.

L'utilisation d'un conteneur qui, soit est disposé dans le logement correspondant « creusé» dans le matériau du substrat, soit est introduit par pénétration dans le matériau comme indiqué ci-après, présente l'avantage d'isoler le support des auxiliaires du contact direct avec la plante quelle que soit la proximité de l'un par rapport à l'autre. Dans la pratique ceci peut conduire, en cas d'utilisation d'un conteneur sur un cube, à placer le conteneur dans le même logement que celui destiné à recevoir la graine ou le bouchon.

L'invention est décrite de façon détaillée pour un exemple d'application dans la suite et en faisant référence aux figures annexées dans lesquelles :
- la figure 1 est une vue de dessus d'un cube selon l'invention,
- la figure 2 est une vue de face du même cube en coupe,
- la figure 3 représente une réalisation analogue à celle de la figure 2, dans laquelle un conteneur est utilisé,
- les figures 4 et 5 représentent d'autres manières d'utiliser un conteneur.

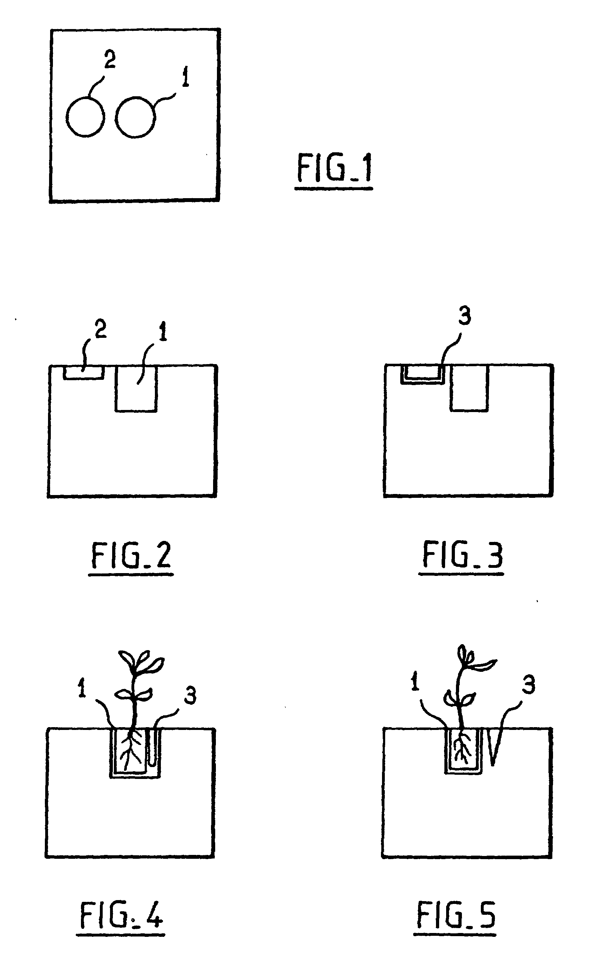

Sur les figures 1 et 2, les logements 1 et 2 sont constitués à même le matériau du cube. L'un est destiné à recevoir le bouchon (1), l'autre (2) les auxiliaires. Pour éviter le contact des auxiliaires avec le plant, les deux logements ne sont pas en communication. Bien évidemment, si sur ces figures un seul logement (2) est représenté, on peut également réaliser plusieurs logements sur le même substrat.

La figure 3 présente un mode de réalisation dans lequel un conteneur 3 est associé au logement 2. L'utilisation d'un tel conteneur, si elle constitue une certaine sophistication de l'ensemble, et peut donc accroître légèrement le coût du procédé, peut offrir des avantages certains. Un premier avantage est de proposer une forme « pré-dosée» de l'auxiliaire. Il est possible de constituer les doses d'auxiliaires directement chez le producteur de ceux-ci qui les conditionne directement dans ces petits conteneurs qui sont alors livrés « remplis» chez le propagateur ou le serriste qui n'a alors qu'à disposer le conteneur dans le logement prévu à cet effet sur le substrat. Toujours dans un tel conditionnement, le conteneur peut être refermé par une pellicule qui maintient les auxiliaires placés dans le conteneur. L'arrachage ou la déchirure de la pellicule au moment de l'utilisation par le serriste ou le propagateur, après mise en place du conteneur sur le substrat, libère les auxiliaires qui peuvent alors se déplacer à la recherche de leurs proies.

En réalisant le conteneur 3 approximativement aux dimensions du logement 2, on bénéficie de tous les avantages indiqués précédemment à propos des logements ménagés directement dans le matériau du substrat. Il est clair, notamment, que les auxiliaires sont bien maintenus en cas de déplacement du substrat. Il est clair également que les conditions d'humidité et de température sont également celles indiquées précédemment. La paroi du conteneur qui est avantageusement constituée en matériau macromoléculaire (polyéthylène, polystyrène...), même si elle peut présenter une certaine imperméabilité, ne s'oppose pas à la constitution d'un degré hygrométrique adéquat en raison de la proximité immédiate du substrat fortement imprégné de solution nutritive. Eventuellement, le matériau du conteneur peut présenter des microperforations, trop petites pour laisser passer les auxiliaires, mais suffisantes pour mettre l'atmosphère dans le conteneur en communication avec celle enfermée dans la masse du substrat.

Les figures 4 et 5 représentent des modes de réalisation dans lesquels le substrat ne comporte pas initialement un logement spécifique pour recevoir les auxiliaires.

A la figure 4, un conteneur de forme oblongue est introduit avec le bouchon dans le logement destiné initialement à celui-ci. Ceci peut être obtenu sans grande difficulté en disposant d'un logement suffisamment large pour recevoir le bouchon, ou la graine, et le conteneur. Dans une telle application, le conteneur 3 présente nécessairement une certaine rigidité. L'existence du conteneur permet également d'isoler la plante d'un contact direct avec le support des auxiliaires, bien que le bouchon et le conteneur soient tous les deux dans le même logement dans le cube. Pour ce type de réalisation, une mise en place simultanée du bouchon et du conteneur par l'utilisateur peut être avantageuse. Par ailleurs, la proximité immédiate de la plante et du conteneur facilite la colonisation de la plante par les auxiliaires.

La figure 5 correspond à l'utilisation d'un conteneur dont les caractéristiques de rigidité et de forme permettent de l'enfoncer dans le matériau du substrat sans qu'un logement ait été préparé préalablement. Pour faciliter la pénétration du conteneur dans le matériau qui offre peu de résistance, il est avantageux de donner une forme en pointe. La mise en place est obtenue, dans ce cas, en exerçant une pression modérée sur le conteneur.

L'exemple suivant est donné pour illustrer la mise en oeuvre de l'invention. Pour la culture des concombres, un semis est effectué sur des cubes de laine minérale de dimensions 10 x 10 x 6,5 cm.

Les cubes sont disposés en rangées de 6 cubes accolés les uns aux autres et maintenus en position par deux bandes de papier collées sur les faces latérales des rangées.

La croissance dans les conditions usuelles pour les cultures de ce type se poursuit de 2 à 7 semaines selon les conditions et la saison. Au cours de cette période et environ au milieu de celle-ci, les cubes sont détachés les uns des autres et espacés d'une distance adéquate pour laisser davantage de place aux plantutes.

Les cubes utilisés sont du type représenté aux figures 1 et 2.

Dans ces cubes, le logement 1 central est celui qui reçoit la graine (ou le bouchon) dès l'origine. Ses dimensions sont : un diamètre de 2,8 cm et une profondeur de 3,8 cm. Le logement 2, excentré, a un diamètre de 2,5 cm et une profondeur de 0,7 cm (soit un volume d'environ 3,5 cm³).

On introduit dans le logement 2,5 cm³ de son supportant en moyenne environ 10 Amblyseius cucumeris par cm³ de support. Ceci se fait dans le même temps que le semis ou environ 1 ou 2 semaines après le semis.

Les Amblyseius introduits dans le logement sont, pour partie, des adultes de sorte qu'ils peuvent combattre les ravageurs tels que les thrips dès leur mise en place.

Le milieu d'élevage des Amblyseius porte des individus à tous les stades de leur développement : des adultes (en petit nombre), des larves (ou nymphes) et des oeufs. Pour alimenter les adultes, le son porte également des larves des thrips qui, pour la circonstance, sont utiles pour le développement des auxiliaires. Les thrips peuvent être remplacés par d'autres proies plus inoffensives pour les plants. Il peut s'agir, par exemple, d'acariens.

Le cycle de reproduction des Amblyseius cucumeris est d'environ 14 jours depuis la ponte jusqu'à l'adulte, ce dernier ayant une durée de vie de 4 semaines. On voit que les individus introduits dès le début de la culture chez les propagateurs ont disparu a la fin de cette étape. Pour autant, les inventeurs ont constaté que la protection se prolonge au-delà de ces quatre semaines (ou 14 jours et 4 semaines pour les oeufs présents dès l'origine). Les adultes, pour une part, demeurent sur leur milieu d'élevage et ce d'autant plus qu'ils y trouvent leurs proies (les thrips introduits avec ce milieu) et pondent de nouveaux oeufs qui conduisent à un nouveau cycle.

Une part des adultes qui se développent, cela va sans dire, se déplace sur les plantes voisines à la recherche des nuisibles qui constituent leurs proies et réalise ainsi la protection recherchée. Si ces derniers individus prospèrent, ils iront également pondre à la face inférieure des feuilles des plants contribuant ainsi à la prolongation de la protection biologique au-delà de la première colonisation.

En principe, si les auxiliaires trouvent un milieu favorable, leur reproduction permet une seule introduction en début de culture. On comprend dès lors l'importance d'aménager les conditions adéquates dans le substrat et dans le choix du milieu d'élevage.

Dans la pratique, il peut être préférable, en particulier pour les cultures les plus longues, de procéder à une ou plusieurs applications nouvelles de milieu d'élevage des auxiliaires. Ceci est d'autant plus nécessaire si les conditions sont telles que les auxiliaires ont peu de proies, autrement dit que la protection a été plus efficace et plus précoce. Dans ce cas, la reproduction des auxiliaires peut être insuffisante pour maintenir en état une population capable de faire face à une invasion tardive de nuisibles.

Pour une culture de concombres qui s'étend sur environ 3 à 11 mois et dont la protection biologique est entreprise dès le début de la culture, comme il vient d'être indiqué, un renouvellement par exemple tous les 1 à 3 mois peut être avantageux.

La méthode de protection biologique qui vient d'être détaillée en liaison avec une culture comprenant successivement l'utilisation d'un substrat sous forme de cube, puis la combinaison de pains et des cubes, est applicable de façon générale à toutes les cultures faisant appel à un substrat fibreux minéral. C'est, en particulier, le cas des cultures dans lesquelles, après le stade de croissance sur cubes, ceux-ci sont placés sur un film liquide nutritif (Nutrient Film Technique). Le milieu d'élevage est alors, comme précédemment, placé dans un logement sur la face supérieure du cube.

Il est aussi possible de n'introduire les auxiliaires qu'au stade de la culture où les cubes sont sur les pains. On bénéficie toujours, dans ce cas, de l'avantage de n'avoir qu'un nombre limité d'interventions à faire à ce stade de la culture.

Si, dans ce qui précède, il est fait référence comme auxiliaires à Amblyseius cucumeris, d'autres auxiliaires intéressants sont par exemple : Phytoseiulus persimilis contre l'acarien tétranique, H. convergens contre les pucerons, etc...

## Revendications

1. Procédé de culture sans sol utilisant un ou plusieurs substrats artificiels tels que laine minérale ou mousse polymère synthétique dans lequel, pour lutter contre les ravageurs, on utilise des auxiliaires introduits au cours de la culture et, le cas échéant, dès le début de celle-ci, **caractérisé en ce que** lesquels auxiliaires sont placés avec leur milieu d'élevage dans un ou plusieurs logements pratiqués dans le substrat de culture.

2. Procédé selon la revendication 1 dans lequel chaque logement est constitué, soit directement dans le substrat, soit en mettant en oeuvre un conteneur lui-même placé dans le substrat.

3. Procédé selon la revendication 1 ou la revendication 2 dans lequel le milieu d'élevage des auxiliaires est disposé dans le ou les logements de manière à ne pas être en contact direct avec la ou les plantule(s) ou plante(s).

4. Procédé selon l'une des revendications précédentes dans laquelle les auxiliaires sont des Amblyseius cucumeris supportés par du son.

5. Procédé selon la revendication 4 dans lequel, pour chaque substrat, on introduit un nombre d'auxiliaires compris entre 5 et 100 environ.

6. Procédé selon la revendication 4 ou la revendication 5 dans lequel, pendant la culture, dans le logement qui le reçoit, le milieu d'élevage comportant les auxiliaires est maintenu dans une atmosphère dont l'hygrométrie est de 60 à 95 % et, de préférence, 65 à 90 %.

7. Procédé selon l'une des revendications 4 à 6 dans lequel la température dans le logement qui reçoit le milieu d'élevage des auxiliaires est maintenue entre 15 et 25°C.

8. Substrat pour la culture hors-sol constitué d'un matériau artificiel tel que laine minérale ou mousse polymère synthétique dans lequel, pour la mise en oeuvre du procédé selon l'une des revendications précédentes, est ménagé au moins un logement (2) de 1 à 6 cm de diamètre et de 0,2 à 3 cm de profondeur destiné à recevoir les auxiliaires pendant la culture.

9. Substrat selon la revendication 8 dans lequel le logement (2) est constitué par un évidement de dimensions appropriées du matériau constituant le substrat.

10. Substrat selon la revendication 9 dans lequel un conteneur (3) correspondant aux dimensions de l'évidement est associé à ce demier pour recevoir les auxiliaires.

11. Substrat selon la revendication 8 pour le déroulement des premiers stades de la culture comportant, à sa face supérieure, outre au moins un logement (1) pour une graine ou un substrat de type « bouchon », au moins un logement (2) distinct du premier est destiné à recevoir le milieu d'élevage des auxiliaires.

12. Substrat selon la revendication 10 dans lequel l'évidement associé au conteneur (3) est ménagé dans un logement (1) qui reçoit aussi un bouchon ou une graine.

## Patentansprüche

1. Verfahren zur erdelosen Kultur unter Verwendung von einem oder mehreren künstlichen Substraten wie Mineralwolle oder synthetischem Polymerschaum, bei dem zur Bekämpfung von Schädlingen Nützlinge eingesetzt werden, die im Verlauf der Kultur und gegebenenfalls ab ihrem Beginn eingebracht werden, **dadurch gekennzeichnet, daß** die Nützlinge mit ihrem Aufzuchtmedium in einer oder mehreren in dem Kultursubstrat hergestellten Aufnahmen angeordnet werden.

2. Verfahren nach Anspruch 1, bei dem jede Aufnahme entweder direkt im Substrat oder unter Verwendung eines wiederum in dem Substrat anzuordnenden Behälters gebildet wird.

3. Verfahren nach Anspruch 1 oder Anspruch 2, bei dem das Aufzuchtmedium der Nützlinge derart in der bzw. den Aufnahmen angeordnet wird, daß es nicht direkt mit dem bzw. den Keimlingen oder der bzw. den Pflanzen in Berührung steht.

4. Verfahren nach einem der vorhergehenden Ansprüche, bei dem die Nützlinge von Kleie getragene *Amblyseius cucumeris* sind.

5. Verfahren nach Anspruch 4, bei dem für jedes Substrat eine zwischen ca. 5 und 100 betragende Anzahl von Nützlingen eingebracht wird.

6. Verfahren nach Anspruch 4 oder Anspruch 5, bei dem das die Nützlinge umfassende Aufzuchtmedium während der Kultur in der das Aufzuchtmedium aufnehmenden Aufnahme in einer Atmosphäre gehalten wird, deren Luftfeuchtigkeit 60 bis 95% und vorzugsweise 65 bis 90% beträgt.

7. Verfahren nach einem der Ansprüche 4 bis 6, bei dem die Temperatur in der das Aufzuchtmedium der Nützlinge aufnehmenden Aufnahme zwischen 15 und 25°C gehalten wird.

8. Substrat für die Kultur außerhalb des Erdbodens, bestehend aus einem künstlichen Material wie Mineralwolle oder synthetischem Polymerschaum, in dem für die Anwendung des Verfahrens nach einem der vorhergehenden Ansprüche mindestens eine zum Aufnehmen der Nützlinge während der Kultur bestimmte Aufnahme (2) mit einem Durchmesser von 1 bis 6 cm und einer Tiefe von 0,2 bis 3 cm vorgesehen ist.

9. Substrat nach Anspruch 8, in dem die Aufnahme (2) aus einer Vertiefung mit geeigneten Abmessungen des das Substrat darstellenden Materials besteht.

10. Substrat nach Anspruch 9, bei dem der Vertiefung ein ihren Abmessungen entsprechender Behälter (3) zum Aufnehmen der Nützlinge zugeordnet ist.

11. Substrat nach Anspruch 8 für die Abwicklung der ersten Kulturstadien, welches auf seiner oberen Oberfläche zusätzlich zu mindestens einer Aufnahme (1) für ein Samenkorn oder ein Substrat vom "Pfropf"-Typ mindestens eine von der ersteren verschiedene, zum Aufnehmen des Aufzuchtmediums der Nützlinge bestimmte Aufnahme (2) aufweist.

12. Substrat nach Anspruch 10, bei dem die dem Behälter (3) zugeordnete Vertiefung in einer Aufnahme (1) vorgesehen ist, welche des weiteren einen Pfropf oder ein Samenkorn aufnimmt.

## Claims

1. Method of cultivation without soil, using one or more artificial substrates, such as mineral wool or synthetic polymer foam, in which, in order to combat pests, there are used auxiliaries which are introduced during cultivation and, if necessary, at the start of cultivation, **characterised in that** the auxiliaries are placed with the growth medium thereof in one or more receivers which are constructed in the cultivation substrate.

2. Method according to claim 1, in which each receiver is formed either directly in the substrate or by using a container which is itself placed in the substrate.

3. Method according to claim 1 or claim 2, in which the growth medium for the auxiliaries is arranged in the receiver(s) in order not to be in direct contact with the plantlet(s) or plant(s).

4. Method according to any one of the preceding claims, in which the auxiliaries are Amblyseius cucumeris supported by bran.

5. Method according to claim 4, in which a number of auxiliaries of approximately between 5 and 100 are introduced for each substrate.

6. Method according to claim 4 or claim 5, in which, during cultivation, in the receiver which receives it, the growth medium which comprises the auxiliaries is maintained in an atmosphere whose hygrometry is from 60 to 95% and preferably from 65 to 90%.

7. Method according to any one of claims 4 to 6, in which the temperature in the receiver which receives the growth medium of the auxiliaries is maintained at between 15 and 25°C.

8. Substrate for soil-less cultivation, constituted by a synthetic material, such as mineral wool or synthetic polymer foam, in which, in order to carry out the method according to any one of the preceding claims, there is arranged at least one receiver (2) which has a diameter of from 1 to 6 cm and a depth of from 0.2 to 3 cm and which is intended to receive the auxiliaries during cultivation.

9. Substrate according to claim 8, in which the receiver (2) is constituted by a recess having appropriate dimensions in the material which constitutes the substrate.

10. Substrate according to claim 9, in which a container (3) which corresponds to the dimensions of the recess is associated with the recess in order to receive the auxiliaries.

11. Substrate according to claim 8 for the course of the first stages of cultivation, comprising, at the upper face thereof, in addition to at least one receiver (1) for a seed or a substrate of the "plug" type, at least one receiver (2) which is separate from the first, which is intended to receive the growth medium of the auxiliaries.

12. Substrate according to claim 10, in which the recess associated with the container (3) is arranged in a receiver (1) which also receives a plug or a seed.
